# EUROPÄISCHE PATENTSCHRIFT

(11) **EP 0 659 827 B1**
(45) Veröffentlichungstag und Bekanntmachung des Hinweises auf die Patenterteilung: **12.02.1997**
(21) Anmeldenummer: 94118189.3
(22) Anmeldetag: 18.11.1994
(51) Int. Cl.: C08L 27/06

(54) **Vinylchloridpolymer-Formmasse**
Vinyl chloride polymer moulding matter
Masse à mouler à base de polymère de polychlorure de vinyl

(30) Priorität: 04.12.1993 DE 4341395
(43) Veröffentlichungstag der Anmeldung: 28.06.1995
(73) Patentinhaber: HOECHST AKTIENGESELLSCHAFT, 65929 Frankfurt am Main (DE)
(72) Erfinder: Hohner, Gerd, Dr., D-86368 Gersthofen (DE); Piesold, Jan-Peter, Dr., D-86153 Augsburg (DE); Herfert, Wilhelm, D-86462 Langweid (DE)

(56) Entgegenhaltungen:
- EP-A- 0 181 037
- GB-A- 2 068 386
- US-A- 4 399 248

## Beschreibung

Die vorliegende Erfindung bezieht sich auf eine PVC-weich-Formmasse mit verminderter Neigung zur Belagsbildung bei der Verarbeitung zu Folien, Spritzgußteilen oder Extrusionsartikeln.

Weichmacherhaltige Homo- oder Copolymere des Vinylchlorids sind wertvolle Rohstoffe zur Herstellung zahlreicher Gebrauchsartikel. Durch Kalandrieren, d.h. die Ausformung der Formasse zwischen den Walzen eines Kalanders entstehen beispielsweise Verpackungsfolien und Fußbodenbeläge. Im Spritzgußverfahren werden weichmacherhaltige PVC-Formmassen beispielsweise zu Schuhsohlen verarbeitet, durch Extrusion werden beispielsweise Kabelummantelungen und Schläuche hergestellt.

Obwohl weichmacherhaltiges PVC an sich eine gute Fließfähigkeit besitzt, werden zur Einstellung des rheologischen Verhaltens bei schnellen Verarbeitungsprozessen, zur besseren Formfüllung bei der Spritzgußverarbeitung, zur Optimierung der Oberflächengüte oder zur Verminderung der Klebeneigung äußerlich wirkende Gleitmittel eingesetzt. Von den zahlreichen Gleitmitteln, die bei der Verarbeitung von PVC-hart eingesetzt werden, sind jedoch nur wenige auch für PVC-weich geeignet. Ein besonderes Problem stellt die häufig zu geringe Verträglichkeit der üblichen Gleitmittel dar, die bei der Verarbeitung zur Bildung von Belägen ("plate-out") an Teilen der Verarbeitungsmaschinen führen.

Es ist bekannt, daß die Verträglichkeit von Gleitmitteln in PVC-weich mit steigendem Weichmacheranteil abnimmt und die Gefahr des Ausschwitzens wird größer. Aus diesem Grunde sollen flüssige Gleitmittel bevorzugt werden. Als solche werden flüssige Fettsäurekomplexester vorgeschlagen, die aus Ölsäure, Adipinsäure und Pentaerythrit hergestellt werden (vgl. DE 1 907 768).

Weiterhin sind als Gleitmittel für weichmacherhaltiges PVC Stearinsäure und ihre Salze sowie Polyethylenwachse vorgeschlagen worden.

Die vorgeschlagenen Gleitmittel für die Verarbeitung von PVC-weich-Formmassen genügen jedoch nicht in allen Punkten den Anforderungen. Stearinsäure, flüssige Fettsäureester und synthetische Paraffine zeigen zwar gute Gleitwirkung (Antiklebewirkung und Fließverbesserung) und geringe Neigung zur Bildung von "plate--out", nachteilig ist jedoch die hohe Flüchtigkeit dieser Produkte. Die bei der Verarbeitung von PVC-hart bewährten Ester der Montansäuren, Polyethylenwachse und oxidierten Polyethylenwachse sind ebenfalls hoch wirksam und zeigen eine nur geringe Flüchtigkeit, andererseits neigen sie jedoch häufig zur Bildung von "plate--out". Es besteht daher der Bedarf für eine PVC-weich Formmasse, die ein Gleitmittel enthält, welches sowohl eine geringe Flüchtigkeit, als auch eine geringe Neigung zur Bildung von "plate-out" auf den Verarbeitungsmaschinen zeigt.

Es wurde nun gefunden, daß diese Aufgabe durch eine Formmasse gelöst werden kann, die ein Gleitmittel enthält, welches durch Copolymerisation von langkettigen α-Olefinen, (Meth)-Acrylsäure, (Meth)-Acrylsäureestern und gegebenfalls von Styrol hergestellt wird.

Derartige Gleitmittel sind an sich aus der PVC-hart-Verarbeitung bekannt (vgl. US 5,306,437), neu ist dagegen ihre besondere Eignung zur Verarbeitung von weichmacher-haltigem PVC.

Die Erfindung betrifft demnach eine Vinylchloridpolymer-Formmasse bestehend aus
mindestens 35 Gew.-% Vinylchloridpolymer,
7 bis 50 Gew.-% Weichmacher und
0,1 bis 5 Gew.-% eines Copolymerisats aus 20 bis 99,5 Gew.-% C₂₄-C₆₀-α- Olefinen, 0,1 bis 50 Gew.-% Acrylsäure oder Methacrylsäure,
0,1 bis 60 Gew.-% Estern der Acryl- oder Methacrylsäure mit aliphatischen C₁-C₆-Monoalkoholen und 0,0 bis 30 Gew.-% Styrol, 3-Methylstyrol, 4-Methylstyrol oder α-Methylstyrol.

Die erfindungsgemäße Formmasse enthält ein Vinylchloridpolymer, das heißt Polyvinylchlorid, welches durch die bekannten Verfahren - beispielsweise Suspensions-, Masse-, Emulsionspolymerisation - hergestellt werden kann, Mischpolymere des Vinylchlorids mit bis zu 30 Gew.-% an Comonomeren wie beispielsweise Vinylacetat, Vinylidenchlorid, Vinylether, Acrylnitril, Acrylsäureester, Maleinsäuremono- oder -diestern oder Olefinen, sowie Pfropfpolymerisate des Polyvinylchlorids. Bevorzugt ist Polyvinylchlorid.

Neben dem Polymeren enthält die erfindungsgemäße Formmasse einen oder mehrere Weichmacher. Gebräuchliche Weichmacher sind Phthalate, wie beispielsweise Dibutylphthalat, Dihexylphthalat, Di-iso-heptylphthalat, Di-iso-nonylphthalat, Di-(2-ethylhexyl)-phthalat (DOP), oder Di-n-octylphthalat, Ester der Naphthen- und Benzoesäure wie beispielsweise Dipropylenglycoldibenzoat, Butylbenzylphthalat, Adipinsäureester wie beispielsweise Di-iso-butyladipat, Di-iso-octyladipat, Di-isodecyladipat, ferner Phosphate wie beispielsweise Triethylphosphat, Tributylphosphat, Tri-2-ethylphosphat, Trikresylphosphat, oder Polyesterweichmacher auf der Basis von Dicarbonsäuren und Diolen, wie beispielsweise Ester aus Adipinsäure und Propandiol, außerdem Trimellithsäureester oder Zitronensäureester.

Die erfindungsgemäß zu verwendenden Gleitmittel sind Copolymerisate aus α-Olefinen, ungesättigten Carbonsäuren und ungesättigten Carbonsäureestern sowie gegebenenfalls vinylaromatischen Verbindungen vom Styroltyp.

Als α-Olefine kommen solche mit einer Kettenlänge von 12 bis 60, bevorzugt von 18 bis 60, besonders bevorzugt von 24 bis 60 C-Atomen in Frage. Es können sowohl kettenreine Olefine als auch Olefin-Gemische eingesetzt werden, wie sie beispielsweise in den bekannten Herstellverfahren als Destillationsschnitte oder Destillationsrückstände anfallen. Technische α-Olefingemische, insbesondere solche mit größerer Kettenlänge, können neben 1- - Alkenen mehr oder minder hohe Mengen innen- und seitenständige olefinische Doppelbindungen (Vinyliden- und Vinylengruppen) enthalten.

Als ungesättigte Carbonsäuren werden Verbindungen der Formel CH₂ = CR¹-COOH, worin R¹ ein Wasserstoffatom oder eine Methylgruppe ist, also beispielsweise Acryl- oder Methacrylsäure eingesetzt. Als ungesättigte Carbonsäureester werden Verbindungen der Formel CH₂ = CR¹-COOR² verwendet, wobei R¹ die obige Bedeutung hat und R² einen geradkettigen oder verzweigten Alkylrest mit 1 bis 6 C-Atomen bedeutet. Bevorzugt sind die Methyl- und Ethylester der Acryl- oder Methacrylsäure, besonders bevorzugt ist der Methylester der Acrylsäure.

Als vinylaromatische Verbindungen können Styrol, 3-Methylstyrol, 4-Methylstyrol oder α-Methylstyrol eingesetzt werden. Möglich ist auch der Einsatz mehrerer der genannten Carbonsäuren, Carbonsäureester und gegebenenfalls Styrolen.

Die Herstellung der erfindungsgemäß zu verwendenden Gleitmittel erfolgt in an sich bekannter Weise durch Umsetzung der Ausgangsmonomeren unter katalytischer Einwirkung geringer Mengen organischer Peroxide in Gegenwart oder in Abwesenheit eines inerten Lösemittels. Bevorzugt ist die Polymerisation in Abwesenheit eines Lösemittels. Beispielsweise kann ein Gemisch aus Carbonsäure, Carbonsäureester und Radikalstarter zu vorgelegtem α-Olefin unter Rühren bei erhöhter Temperatur zugetropft werden. Nach Beendigung der Reaktion können nicht umgesetzte Monomere sowie flüchtige Zerfallsprodukte des Peroxids durch Destillation abgetrennt werden. Als Radikalstarter werden bevorzugt organische Peroxide eingesetzt. Dabei ist die Reaktionstemperatur der Zerfallscharakteristik des jeweils verwendeten Peroxids anzupassen. Bei einer Temperatur von 100 bis 160°C sind beispielsweise Dialkylperoxide wie Di-t-butylperoxid oder Diaroylperoxide wie Dibenzoylperoxid gut geeignet. Das molare Verhältnis der Monomerkomponenten und damit der chemische Aufbau und die Polarität der Copolymerisate können in weiten Grenzen eingestellt werden. Dadurch besteht die Möglichkeit, die Eigenschaften des Gleitmittels den jeweiligen anwendungstechnischen Erfordernissen in optimaler Weise anzupassen.

Die Monomeren werden in den folgenden Verhältnissen eingesetzt:

| | |
|---|---|
| α-Olefin | 20 bis 99,5, vorzugsweise 40 bis 95 Gew.-%, |
| ungesättigte Carbonsäure | 0,1 bis 50, vorzugsweise 0,5 bis 30 Gew.-%, |
| unges. Carbonsäureester | 0,1 bis 60, vorzugsweise 1,0 bis 40 Gew.-%, |
| Styrolverbindung | 0,0 bis 30, vorzugsweise 0,0 bis 20 Gew.-%. |

Die Reaktionstemperatur beträgt 70 bis 180, vorzugsweise 90 bis 160°C, der Reaktionsdruck 1,0 bis 5,0, vorzugsweise 1,0 bis 1,5 bar. die Reaktionszeit 0,5 bis 20, vorzugsweise 1 bis 7 Stunden.

Die Mengenverhältnisse in der erfindungsgemäßen Formmasse betragen:

| | |
|---|---|
| Vinylchloridpolymer | mindestens 35 vorzugsweise 48 bis 92,8 Gew.-%, |
| Weichmacher | 7 bis 50 Gew.-%, |
| Gleitmittel | 0,1 bis 5, vorzugsweise 0,2 bis 2 Gew.-%. |

Neben den vorgenannten Bestandteilen kann die erfindungsgemäße Formmasse noch zusätzlich die üblichen Zusatzstoffe wie beispielsweise Stabilisatoren, Antioxidatien, Lichtschutzmittel, Antistatika, Flammschutzmittel, Füll- und Verstärkungsstoffe, Farbstoffe und Pigmente enthalten.

Die Herstellung der erfindungsgemäßen Formmasse erfolgt in der üblichen Weise. Eine bevorzugte Vorgehensweise besteht darin, die Rezeptbestandteile in schnellaufenden Mischern unter Erwärmung so lange zu mischen, bis ein homogenes, rieselfähiges Gemisch (Dry-blend) entstanden ist.

Die erfindungsgemäße Formmasse zeichnet sich dadurch aus, daß sie im Vergleich zu anderen geeigneten Formmassen eine besonders geringe Ausschwitzneigung zeigt. Stillstandszeiten zur Reinigung der Verarbeitungsmaschinen treten dadurch in geringerem Umfang auf, die Qualität der hergestellten Produkte wird verbessert.

Die folgenden Beispiele sollen die Erfindung erläutern.

Zunächst wurden Prüfmischungen verschiedener Zusammensetzung jeweils 20 Minuten auf einem 2-Walzwerk bei 160°C ohne Friktion gewalzt. Das Walzfell wurde abgezogen, die Walze jedoch nicht gereinigt. Anschließend wurde ein weiß eingefärbtes Fell der nachfolgend beschriebenen Zusammensetzung auf die Walze gegeben und fünf Minuten nachgewalzt:

| | |
|---|---|
| S- PVC (K- Wert ca. 70) | 70,00 Teile |
| Di-(2-ethylhexyl)-phthalat (DOP) | 30,00 Teile |
| Titandioxid | 4,00 Teile |
| Dioctylzinnstabilisator | 1,00 Teile |

Dieses Fell nimmt eventuell ausgeschwitzte Bestandteile der Prüfmischung auf, welche durch das Rotpigment gefärbt sind. Je stärker die Ausschwitzneigung der Prüfmischung ist, umso tiefer rot wird sich das weiße Fell färben. Eine Farbmessung an diesem Fell (Bestimmung des a-Werts laut L,a,b- Farbmeßsystem) erlaubt Rückschlüsse auf das Plate-out-Verhalten des untersuchten Gleitmittels. Je größer der a-Wert ist, desto schlechter ist das Prüfprodukt im Hinblick auf diese Eigenschaft.

In den Beispielen wurden folgende Prüfprodukte eingesetzt:
- Beispiele 1 bis 4: Erfindungsgemäßes Copolymer aus C₃₀-α-Olefin (69 Gew.%), Acrylsäure (1 Gew.%) und Methylacrylat (30 Gew.%), Tp 71°C, Viskosität 478 mPa.s (90°C), Säurezahl 8 mg KOH/g, Verseifungszahl 186 mg KOH/g
- Beispiele A: ohne Gleitmittel (Vergleich)
- Beispiele B: Stearinsäure (Erstarrungspunkt 53°C, Dichte 0,840 g/cm³, Viskosität 10 mPa.s (80°C), Säurezahl 208 mg KOH/g)
- Beispiele C: Ca-haltiger 1,3-Butandiolester der Montansäuren (Tp 101°C, Viskosität 300 mPa.s (120°C), Säurezahl 13 mg KOH/g, Verseifungszahl 105 g KOH/g, Ca-Gehalt 1,48 %)
- Beispiele D: Polyethylenwachs (Tp 120°C, Viskosität 600 mPa.s (140°C), Säurezahl 0 mg KOH/g, Verseifungszahl 0 mg KOH/g, Dichte 0,93 g/cm³)
- Beispiele E: oxidiertes Polyethylenwachs (Tp 105°C, Viskosität 360 mPa.s (120°C), Säurezahl 17 mg KOH/g, Verseifungszahl 40 mg KOH/g, Dichte 0,95 g/cm³)
- Beispiele F: Flüssiger, hochmolekularer Fettsäurekomplexester aus Ölsäure, Adipinsäure und Pentaerythrit ( Stockpunkt -2°C, Dichte 0,94 g/cm³, Viskosität 625 mPa.s (20°C), Jodzahl 60)
- Beispiele G: Syntheseparaffin, hergestellt nach dem Fischer-Tropsch-Verfahren (Tp 108°C, Dichte 0,93 g/cm³, Viskosität 12 mPa.s (120°C)).

### Beispiel 1 und Vergleichsbeispiele 1A bis 1G

### (Ca/Zn- stabilisiertes PVC)

| | |
|---|---|
| S- PVC (K- Wert ca. 70) | 70,00 Teile |
| Di-(2-ethylhexyl)-phthalat (DOP) | 30,00 Teile |
| flüssiger Calcium/Zink-Stabilisator | 2,00 Teile |
| Epoxidiertes Sojabohnenöl | 2,00 Teile |
| Acrylathaltiges Verarbeitungshilfsmittel (processing aid) | 1,00 Teile |
| Hydroxystearinsäure | 0,20 Teile |
| Rotpigment | 1,00 Teile |
| Prüfprodukt | 0,50 Teile |

Folgende Werte wurden ermittelt:

| Bsp. | 1 | 1A | 1B | 1C | 1D | 1E | 1F | 1G |
|---|---|---|---|---|---|---|---|---|
| a-Wert | -0,01 | 1,32 | -0,3 | 3,74 | 0,10 | 7,76 | 0,18 | -0,21 |

### Beispiel 2 und Vergleichsbeispiele 2A bis 2G

### (Pb-stabilisiertes PVC-weich)

| | |
|---|---|
| S-PVC (K-Wert ca. 70) | 100,00 Teile |
| Di-(2-ethylhexyl)-phthalat (DOP) | 65,00 Teile |
| gecoatete Kreide | 20,00 Teile |
| tribasisches Bleisulfat | 1,00 Teile |
| neutrales Bleistearat | 1,00 Teile |
| Rotpigment | 1,00 Teile |
| Prüfprodukt | 0,60 Teile |

Die Versuchsdurchführung erfolgte wie bei Beispiel 1 beschrieben. Folgende Werte wurden ermittelt:

| Bsp. | 2 | 2A | 2B | 2C | 2D | 2E | 2F | 2G |
|---|---|---|---|---|---|---|---|---|
| a-Wert | -0,68 | -0,2 | -0,54 | -0,18 | -0,29 | -0,47 | -0,45 | -0,23 |

### Beispiel 3 und Vergleichsbeispiele 3A bis 3G

### (Ba/Cd-stabilisiertes PVC-weich)

| | |
|---|---|
| S-PVC (K-Wert ca. 70) | 100,00 Teile |
| Di-(2-ethylhexyl)-phthalat (DOP) | 80,00 Teile |
| Ba/Cd-Stabilisator | 2,00 Teile |
| 12-Hydroxystearinsäure | 0,20 Teile |
| Rotpigment | 1,00 Teile |
| Prüfprodukt | 0,50 Teile |

Die Versuchsdurchführung erfolgte wie bei Beispiel 1 beschrieben. Folgende Werte wurden gemessen:

| Bsp. | 3 | 3A | 3B | 3C | 3D | 3E | 3F | 3G |
|---|---|---|---|---|---|---|---|---|
| a-Wert | 12,05 | 15,3 | 8,75 | 18,24 | 11,91 | 15,02 | 15,10 | 11,54 |

Es wurden die gleichen Prüfprodukte verwendet wie bei Beispiel 1.

### Beispiel 4 und Vergleichsbeispiele 4A bis 4G

### (Sn-stabilisiertes PVC-weich)

| | |
|---|---|
| S-PVC (K-Wert ca. 70) | 100,00 Teile |
| Di-(2-ethylhexyl)-phthalat (DOP) | 60,00 Teile |
| Epoxidiertes Sojabohnenöl | 3,00 Teile |
| Organozinncarboxylatstabilisator | 2,00 Teile |
| Rotpigment | 1,00 Teile |
| Prüfprodukt | 0,50 Teile |

Die Versuchsdurchführung erfolgte wie bei Beispiel 1 beschrieben.

| Bsp. | 4 | 4A | 4B | 4C | 4D | 4E | 4F | 4G |
|---|---|---|---|---|---|---|---|---|
| a-Wert | 1,30 | klebt | 1,18 | 26,7 | 4,55 | 4,35 | 13,64 | 11,55 |

Die Versuchsergebnisse zeigen, daß unter den geprüften Formmassen, welche Gleitmittel mit geringer Flüchtigkeit (Beispiele C, D, E, 1 bis 4 und F) enthalten, nur die Formmassen der Beispiele 1 bis 4 eine ausreichend geringe Neigung zur Bildung von "plate out" zeigen. Die Formmassen B und F zeigen zwar eine geringe Bildung von "plate out", die enthaltenen Gleitmittel besitzen jedoch eine unvorteilhaft hohe Flüchtigkeit.

## Patentansprüche

1. Vinylchloridpolymer-Formmasse bestehend aus
mindestens 35 Gew.-% Vinylchloridpolymer,
7 bis 50 Gew.-% Weichmacher und
0,1 bis 5 Gew.-% eines Copolymerisats aus 20 bis 99,5 Gew.-% C₂₄-C₆₀-α- Olefinen, 0,1 bis 50 Gew.-% Acrylsäure oder Methacrylsäure, 0,1 bis 60 Gew.-% Estern der Acryl- oder Methacrylsäure mit aliphatischen C₁-C₈-Monoalkoholen und 0,0 bis 30 Gew.-% Styrol, 3-Methylstyrol, 4-Methylstyrol oder α-Methylstyrol.

2. Formmasse nach Anspruch 1, dadurch gekennzeichnet, daß sie zusätzlich Stabilisatoren, Antioxidatien, Lichtschutzmittel, Antistatika, Flammschutzmittel, Füll- und Verstärkungsstoffe, Farbstoffe und Pigmente enthält.

## Claims

1. A vinyl chloride polymer molding composition comprising
at least 35% by weight of vinyl chloride polymer, from 7 to 50% by weight of plasticizer and from 0.1 to 5% by weight of a copolymer comprising from 20 to 99.5% by weight of C₂₄-C₆₀-α-olefins, from 0.1 to 50% by weight of acrylic acid or methacrylic acid, from 0.1 to 60% by weight of esters of acrylic or methacrylic acid with aliphatic C₁-C₆-monoalcohols and rom 0.0 to 30% by weight of styrene, 3-methylstyrene, 4-methylstyrene or α-methylstyrene.

2. A molding composition as claimed in claim 1, which additionally contains stabilizers, antioxidants, light stabilizers, antistatics, flameproofing agents, fillers, reinforcing materials, dyes and pigments.

## Revendications

1. Mélange à mouler à base d'un polymère de chlorure de vinyle, constitué
d'au moins 35 % en poids d'un polymère de chlorure de vinyle,
de 7 à 50 % en poids d'un plastifiant, et
de 0,1 à 5 % en poids d'un copolymère constitué de 20 à 99,5 % en poids d'α-oléfines en C₂₄-C₆₀, de 0,1 à 50 % en poids d'acide acrylique ou d'acide méthacrylique, de 0,1 à 60 % en poids d'esters de l'acide acrylique ou de l'acide méthacrylique avec des monoalcools aliphatiques en C₁-C₆, et de 0,0 à 30 % en poids de styrène, de 3-méthylstyrène, de 4-méthylstyrène ou d'α-méthylstyrène.

2. Mélange à mouler selon la revendication 1, caractérisé en ce qu'il contient en outre des stabilisants, des anti-oxydants, des photoprotecteurs, des antistatiques, des agents d'ignifugation, des matières de charge et agents de renforcement, des colorants et des pigments.
